# EUROPEAN PATENT APPLICATION

(11) **EP 4 685 914 A1**
(43) Date of publication of application: **28.01.2026**
(21) Application number: 25190758.0
(22) Date of filing: 21.07.2025
(51) Int. Cl.: H01M 10/0585, H01M 50/209, H01M 50/509, H01M 50/55, H01M 50/557

(54) **SECONDARY BATTERY AND BATTERY MODULE**

(30) Priority: 25.07.2024 KR 20240098350
(71) Applicant: SAMSUNG SDI CO., LTD., Yongin-si, Gyeonggi-do 17084 (KR)
(72) Inventor: Kim, Bo Hyun, 16678 Suwon-si, Gyeonggi-do (KR); Jo, Jin Hyeong, 16678 Suwon-si, Gyeonggi-do (KR); Yoo, Seung Yeol, 16678 Suwon-si, Gyeonggi-do (KR); Kim, Hyeok Joo, 16678 Suwon-si, Gyeonggi-do (KR); Kim, Heon Hee, 16678 Suwon-si, Gyeonggi-do (KR); Kim, Duck Hyun, 16678 Suwon-si, Gyeonggi-do (KR)
(74) Representative: Gulde & Partner

(57) **Abstract**

A secondary battery and a battery module are disclosed. A secondary battery includes a plurality of electrode assemblies, each including an electrode forming a tab, a case accommodating the plurality of electrode assemblies, a cap plate covering an opening of the case, and a terminal protruding from the outside of the cap plate and electrically connected to the plurality of electrode assemblies.

## Description

### BACKGROUND

### 1. Field

Aspects of embodiments of the present invention relate to a secondary battery and a battery module.

### 2. Description of the Related Art

A lithium secondary battery is a battery that includes positive and negative electrodes that include active materials capable of intercalating and deintercalating lithium ions, and an electrolyte, and produces electrical energy through oxidation and reduction reactions when lithium ions are intercalated and deintercalated into/from the positive and negative electrodes.

Recently, with the rapid spread of electronic devices that use batteries, such as mobile phones, notebook computers, and electric vehicles, the demand for high energy density and high capacity secondary batteries has been rapidly increasing. Accordingly, research and development to improve the performance of lithium secondary batteries are being actively conducted.

Accordingly, there is a trend toward larger secondary batteries in order to develop secondary batteries with higher capacity and higher energy density. However, there is not a clear method to efficiently enlarge secondary batteries.

The above-described information disclosed in the background technology of this invention is provided to improve understanding of the background of the present invention and, therefore, may include information that does not constitute the related art.

### SUMMARY

The invention is defined by the appended claims. The description that follows is subjected to this limitation. Any disclosure lying outside the scope of said claims is only intended for illustrative as well as comparative purposes.

According to an aspect of embodiments of the present invention, a large-sized secondary battery and/or a battery module including such a secondary battery is provided.

According to another aspect of embodiments of the present invention, a secondary battery that is scalable in a thickness direction and/or a battery module including such a secondary battery is provided.

According to another aspect of embodiments of the present invention, a secondary battery capable of improving the voltage of the secondary battery and/or a battery module including such a secondary battery is provided.

However, aspects and technical problems to be achieved by the present invention are not limited to the above-mentioned aspects and problems, and other aspects and problems that are not mentioned will be clearly understood by those skilled in the art from the following description.

According to one or more embodiments of the present invention, a secondary battery includes a plurality of electrode assemblies, each including an electrode including a tab, a case accommodating the plurality of electrode assemblies, a cap plate covering an opening of the case, and a terminal protruding outside of the cap plate and electrically connected to the plurality of electrode assemblies.

According to one or more embodiments of the present invention, a battery module includes a plurality of secondary batteries, and a housing accommodating the plurality of secondary batteries, and each of the plurality of secondary batteries may include a plurality of electrode assemblies, each including an electrode including a tab, a case accommodating the plurality of electrode assemblies, a cap plate covering an opening of the case, and a terminal protruding outside of the cap plate and electrically connected to the plurality of electrode assemblies.

### BRIEF DESCRIPTION OF THE DRAWINGS

The following drawings included with this specification illustrate some embodiments of the present invention and, together with the detailed description of the invention described herein, are provided to further understanding of the technical aspects and concept of the present invention; however, the present invention is not to be construed as being limited to matters illustrated in the drawings, in which:
FIG. 1 is a schematic perspective view of a secondary battery according to an embodiment of the present invention;
FIG. 2 is a schematic perspective view of an electrode assembly according to an embodiment of the present invention;
FIG. 3 is a schematic view illustrating an arrangement of two or more electrode assemblies according to an embodiment of the present invention;
FIG. 4 is a schematic top view illustrating a terminal according to an embodiment of the present invention;
FIG. 5 is a schematic top view illustrating a terminal according to an embodiment of the present invention;
FIG. 6 is a schematic view illustrating an arrangement of two or more electrode assemblies according to an embodiment of the present invention;
FIG. 7 is a schematic top view illustrating a terminal according to an embodiment of the present invention;
FIG. 8 is a schematic top view illustrating a terminal according to an embodiment of the present invention;
FIG. 9 is a schematic top view illustrating a terminal according to an embodiment of the present invention;
FIG. 10 is a schematic top view illustrating a terminal according to an embodiment of the present invention;
FIG. 11 is a schematic top view illustrating a terminal according to an embodiment of the present invention;
FIG. 12 is a schematic top view illustrating a terminal according to an embodiment of the present invention;
FIG. 13 is a schematic top view illustrating a terminal in a battery module according to an embodiment of the present invention;
FIG. 14 is a schematic top view illustrating a terminal in a battery module according to an embodiment of the present invention;
FIG. 15 is a schematic top view illustrating a terminal in a battery module according to an embodiment of the present invention;
FIG. 16 is a schematic top view illustrating a terminal in a battery module according to an embodiment of the present invention; and
FIG. 17 is a schematic top view illustrating a terminal in a battery module according to an embodiment of the present invention.

### DETAILED DESCRIPTION

Herein, some embodiments of the present invention will be described in further detail. However, the embodiments are presented as examples, the present invention is not limited thereby, and the present invention is to be defined by the scope of the claims.

Unless otherwise specified herein, when a part such as a layer, film, area, plate, or the like is described as being "on" another part, it includes not only a case in which the part is directly on the other part but also a case in which there is another part therebetween.

Unless otherwise specified in this specification, anything indicated in the singular may also include the plural. Further, unless otherwise stated, "A or B" may mean "including A, including B, or including A and B."

As used herein, the term "a combination thereof" may mean a mixture, laminate, composite, copolymer, alloy, blend, and reaction product of the components.

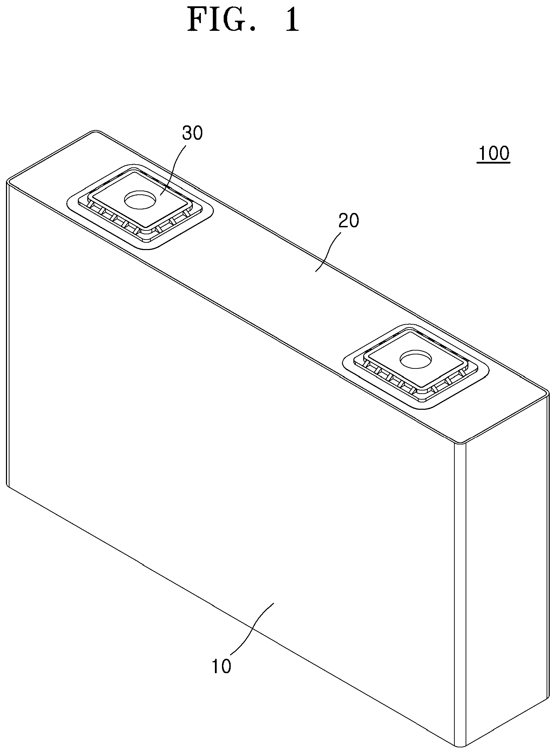

FIG. 1 is a schematic perspective view of a secondary battery according to an embodiment of the present invention.

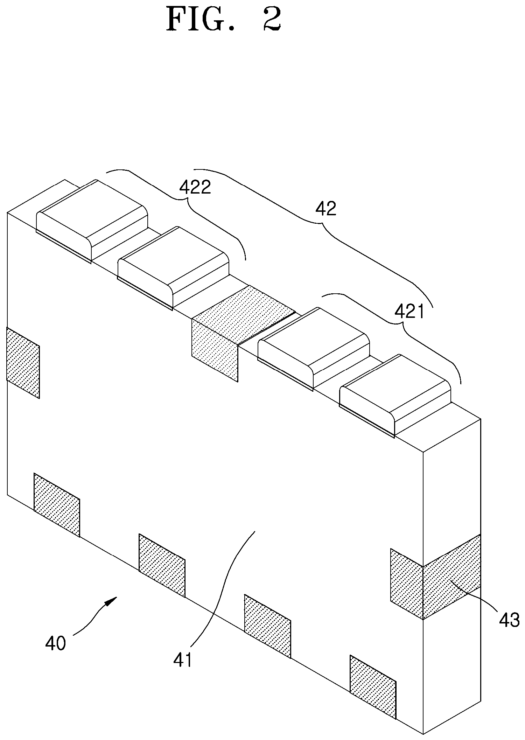

FIG. 2 is a schematic perspective view of an electrode assembly according to an embodiment of the present invention.

In FIG. 1, 100 represents a secondary battery according to an embodiment of the present invention.

A secondary battery 100 according to an embodiment of the present invention includes a plurality of electrode assemblies 40, each including an electrode forming a tab, a case 10 accommodating the plurality of electrode assemblies 40, a cap plate 20 covering an opening of the case 10, and a terminal 30 protruding outside of the cap plate 20 and electrically connected to the plurality of electrode assemblies 40.

The electrode assembly 40 includes electrodes and a separator. The electrodes include a first electrode and a second electrode. In an embodiment, for example, the electrode assembly 40 is formed by stacking a first electrode, a second electrode, and a separator located between the first electrode and the second electrode. For example, the electrode assembly 40 includes a stack cell in the form of alternately stacked electrodes and separators. For example, the electrode assembly 40 may be formed by, for example, inserting the first electrode and the second electrode alternately into the separator and stacking the electrodes and the separator. In an embodiment, the first electrode includes, for example, a positive electrode, and the second electrode includes, for example, a negative electrode. In an embodiment, the first electrode includes, for example, a negative electrode, and the second electrode includes, for example, a positive electrode.

The electrode assembly 40 includes a main body 41 in which the electrodes and the separator are stacked. The main body 41 is formed by, for example, stacking the first electrode, the second electrode, and the separator.

The electrode assembly 40 includes a tab 42 extending from the main body 41. The tab 42 functions as a passage through which the electrode assembly 40 may be electrically connected to the terminal 30. The tab 42 is formed to protrude outward from the main body 41.

The tab 42 includes a first tab 421 connected to the first electrode and a second tab 422 connected to the second electrode.

In an embodiment, the tab 42 may be formed on an upper surface of the main body 41, for example, as shown in FIG. 2. For example, the tab 42 may be formed such that both the first tab 421 and the second tab 422 protrude in a same direction from the main body 41. For example, both the first tab 421 and the second tab 422 may be formed to protrude upward from the upper surface of the main body 41. The first tab 421 and the second tab 422 may be located so as not to overlap each other to prevent or substantially prevent a short circuit due to contact between the first tab 421 and the second tab 422 from occurring. For example, the first tab 421 may be located on a side of the upper surface of the main body 41, and the second tab 422 may be located on another side of the upper surface of the main body 41.

However, unlike as shown in FIG. 2, the tab 42 may be formed on a side of the main body 41. In this case, the first tab 421 and the second tab 422 may be formed to protrude in different directions from the main body 41. For example, the first tab 421 may be formed to protrude from a side of the main body 41, and the second tab 421 may be formed to protrude from another side of the main body 41. For example, the first tab 421 and the second tab 421 may protrude in opposite directions.

For convenience of explanation, an example of a case in which the tab 42 is formed on the upper surface of the main body 41 and protrudes toward the upper side of the main body 41 will be described.

The electrode assembly 40 may further include a tape 43 that fixes the main body 41. The tape 43 fixes the main body 41 which becomes thicker as the main body 41 is stacked. The tape 43 may be located in one or more forms, for example, on at least one of the lower surface of the main body 41, the side of the main body 41, and the upper surface of the main body 41. Although not illustrated, in an embodiment, the electrode assembly 40 may further include bonding to fix the main body 41 in addition to the tape 43 to fix the main body 41.

The case 10 provides a space in which the electrode assembly 40 is accommodated and forms the exterior of the secondary battery 100. The case 10 may be formed, for example in a cylindrical or prismatic shape. Herein, for convenience of explanation, a case in which the case 10 is prismatic in shape will be described as an example. The case 10 may include, for example, aluminum or an aluminum alloy.

The case 10 may accommodate a plurality of electrode assemblies 40. For example, the plurality of electrode assemblies 40 may be arranged in parallel and accommodated inside the case 10.

The secondary battery 100 may accommodate an electrolyte together with the electrode assembly 40 within the case 10. The cap plate 20 seals the case 10 by covering the opening of the case 10. Through this, the secondary battery 100 can prevent or substantially prevent the electrolyte from leaking outside the case 10 and protect the electrode assembly 40.

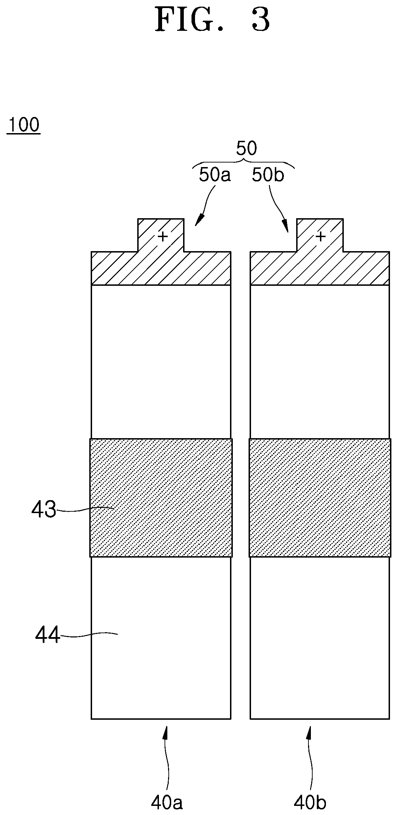

In an embodiment, the secondary battery 100 further includes a pack (44, see FIG. 3) that surrounds an outer surface of each of the plurality of electrode assemblies 40. The pack 44 surrounds the main body 41 fixed by a tape 43. The pack 44 surrounds, for example, at least two sides of the main body 41. The pack 44 surrounds, for example, a lower surface of the main body 41 and the four sides of the main body 41 that are connected to the lower surface. Through this, the pack 44 may be accommodated in the case 10 while the electrode assembly 40 is fixed. In addition, the pack 44 may facilitate the electrode assembly 40 to be easily inserted into the case 10.

Herein, the positive and negative electrodes included in the secondary battery 100 will be described in further detail. In addition, the separator forming the electrode assembly 40 together with the electrode and the electrolyte injected into the case 10 together with the electrode assembly 40 will be described.

### Positive electrode active material

As the positive electrode active material, a compound capable of reversible intercalation and deintercalation of lithium (lithiated intercalation compound) may be used. In an embodiment, at least one of composite oxides of lithium and a metal selected from cobalt, manganese, nickel, and a combination thereof may be used.

The composite oxide may be a lithium transition metal composite oxide, and examples thereof may include lithium nickel-based oxides, lithium cobalt-based oxides, lithium manganese-based oxides, lithium iron phosphate-based compounds, cobalt-free nickel-manganese-based oxides, or a combination thereof.

As an example, a compound represented by any one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

For example, the positive electrode active material may be a nickel-rich positive electrode active material in which a nickel content is 80 mol% or more, 85 mol% or more, 90 mol% or more, 91 mol% or more, or 94 mol% or more and 99 mol% or less, based on 100 mol% of the metal other than lithium in a lithium transition metal composite oxide. The nickel-rich positive electrode active material can achieve high capacity and thus can be applied to high-capacity, high-density lithium secondary batteries.

### Positive electrode

The positive electrode for the lithium secondary battery 100 may include a current collector and a positive electrode active material layer formed on the current collector. The positive electrode active material layer includes a positive electrode active material and may further include a binder and/or a conductive material.

For example, the positive electrode may further include an additive that may function as a sacrificial positive electrode.

In an embodiment, the content of the positive electrode active material may be 90 wt% to 99.5 wt% with respect to 100 wt% of the positive electrode active material layer, and the content of the binder and conductive material may both be 0.5 wt% to 5 wt% based on 100 wt% of the positive electrode active material layer.

The binder functions to attach the positive electrode active material particles to each other well and also to attach the positive electrode active material to the current collector well. Representative examples of the binder include, but are not limited to, polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like.

The conductive material imparts conductivity to an electrode, and any suitable material that does not cause chemical change and is electronically conductive may be used in the battery being constructed. Examples of the conductive material include carbon-based materials, such as natural graphite, artificial graphite, carbon black, acetylene black, Ketjen black, carbon fibers, carbon nanofibers, and carbon nanotubes; metal-based materials containing copper, nickel, aluminum, and silver in the form of metal powder or metal fibers; conductive polymers, such as polyphenylene derivatives; or mixtures thereof.

In an embodiment, Al may be used as the current collector, but the present invention is not limited thereto.

### Negative electrode active material

The negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, and, for example, may include crystalline carbon, amorphous carbon, or a combination thereof. Examples of the crystalline carbon may include graphite, such as amorphous, platy, flaky, spherical or fibrous natural graphite or artificial graphite, and examples of the amorphous carbon may include soft carbon, hard carbon, mesophase pitch carbide, calcined coke, etc.

As the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or a Sn-based negative electrode active material may be used. The Si-based negative electrode active material may include silicon, a silicon-carbon composite, SiOₓ (0 < x ≤ 2), a Si-Q alloy (where Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in the form of silicon particles whose surface is coated with amorphous carbon. For example, the silicon-carbon composite may include a secondary particle (core) in which silicon primary particles are assembled and an amorphous carbon coating layer (shell) located on the surface of the secondary particle. The amorphous carbon may also be located between the silicon primary particles, such that, for example, the silicon primary particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or Sn-based negative electrode active material may be used in a combination with a carbon-based negative electrode active material.

### Negative electrode

The negative electrode for the lithium secondary battery 100 includes a current collector and a negative electrode active material layer located on the current collector. The negative electrode active material layer includes a negative electrode active material and may further include a binder and/or a conductive material.

In an embodiment, for example, the negative positive active material layer may include 90 to 99 wt% of the negative positive active material, 0.5 to 5 wt% of the binder, and 0 to 5 wt% of the conductive material.

The binder functions to attach the negative electrode active material particles to each other well and also to attach the negative electrode active material to the current collector well. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If using an aqueous binder as the negative electrode binder, a cellulose-based compound capable of imparting viscosity may be further included. As the cellulose-based compound, one or more types of carboxymethyl cellulose, hydroxypropyl methyl cellulose, methyl cellulose, or alkali metal salts thereof, may be used in combination. In an embodiment, as the alkali metal, Na, K, or Li may be used.

The dry binder is a polymeric material that can be fiberized, and may be, for example, polytetrafluoroethylene, polyvinylidene fluoride, a polyvinylidene fluoride-hexafluoropropylene copolymer, polyethylene oxide, or a combination thereof.

The conductive material imparts conductivity to an electrode, and any suitable material that does not cause chemical change and is electronically conductive may be used in the battery being constructed. Specific examples may include carbon-based materials, such as natural graphite, artificial graphite, carbon black, acetylene black, Ketjen black, carbon fibers, carbon nanofibers, and carbon nanotubes; metal-based materials containing copper, nickel, aluminum, and silver in the form of a metal powder or metal fibers; conductive polymers, such as polyphenylene derivatives; or mixtures thereof.

As the negative electrode current collector, any material selected from a copper foil, a nickel foil, a stainless steel foil, a titanium foil, a nickel foam, a copper foam, a polymer substrate coated with a conductive metal, and a combination thereof may be used.

### Electrolyte

The electrolyte for the lithium secondary battery 100 includes a non-aqueous organic solvent and a lithium salt.

The non-aqueous organic solvent functions as a medium through which ions involved in the electrochemical reaction of the battery can move.

The non-aqueous organic solvent may be a carbonate-based, ester-based, ether-based, ketone-based, or alcohol-based solvent, an aprotic solvent, or a combination thereof.

Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

Examples of the ester-based solvent may include methyl acetate, ethyl acetate, n-propyl acetate, dimethyl acetate, methyl propionate, ethyl propionate, decanolide, mevalonolactone, valerolactone, caprolactone, and the like.

Examples of the ether-based solvent may include dibutyl ether, tetraglyme, diglyme, dimethoxyethane, 2-methyltetrahydrofuran, 2,5-dimethyltetrahydrofuran, and tetrahydrofuran. In addition, cyclohexanone and the like may be used as the ketone-based solvent. Ethyl alcohol, isopropyl alcohol, and the like may be used as the alcohol-based solvent, and nitriles such as R-CN (where R is a linear, branched, or cyclic hydrocarbon group having 2 to 20 carbon atoms and may include a double bond, an aromatic ring, or an ether group); amides such as dimethylformamide; dioxolanes such as 1,3-dioxolane and 1,4-dioxolane; sulfolanes, and the like may be used as the aprotic solvent.

The non-aqueous organic solvent may be used alone or in a combination of two or more.

In an embodiment, if using the carbonate-based solvent, a mixture of a cyclic carbonate and a chain carbonate may be used, and the cyclic carbonate and the chain carbonate may be mixed in a volume ratio of 1:1 to 1:9.

The lithium salt is a material that is dissolved in an organic solvent and acts as a source of lithium ions within the battery, enabling the basic operation of the lithium secondary battery and promoting the movement of lithium ions between the positive electrode and the negative electrode. Representative examples of the lithium salts may include one or two or more selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI)), LiC₄F₉SO₃, LiN(CₓF₂ₓ₊₁SO₂)(C_{y}F_{2y+1}SO₂) (where x and y are integers from 1 and 20), lithium trifluoromethanesulfonate, lithium tetrafluoroethanesulfonate, lithium difluorobis(oxalato)phosphate (LiDFOB), and lithium bis(oxalato)borate (LiBOB).

### Separator

Depending on the type of lithium secondary battery 100, the separator may be present between the positive and negative electrodes. As the separator, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, or a polypropylene/polyethylene/polypropylene three-layer separator may be used.

The separator may include a porous substrate, and a coating layer including an organic material, an inorganic material, or a combination thereof located on one side or both sides of the porous substrate.

The porous substrate may include a polymer film formed of at least one polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyether imide, polyamide imide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or copolymers or mixtures of two or more of these.

The organic material may include a polyvinylidene fluoride-based polymer or a (meth)acrylic polymer.

In an embodiment, the inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present in a mixed form in one coating layer or may be present in a form in which a coating layer including an organic material and a coating layer including an inorganic material are laminated.

Through this structure, a size of the secondary battery 100 according to an embodiment of the present invention can be increased and a cost thereof may be reduced.

Herein, various embodiments that can enlarge the secondary battery will be described. In addition, a method for increasing the voltage of a secondary battery according to the size of the secondary battery will be described.

FIG. 3 is a schematic view illustrating an arrangement of two or more electrode assemblies according to an embodiment of the present invention.

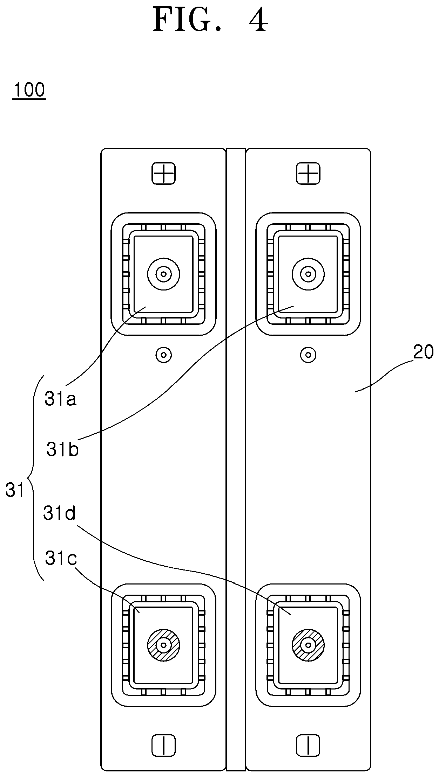

FIG. 4 is a schematic top view illustrating a terminal according to an embodiment of the present invention.

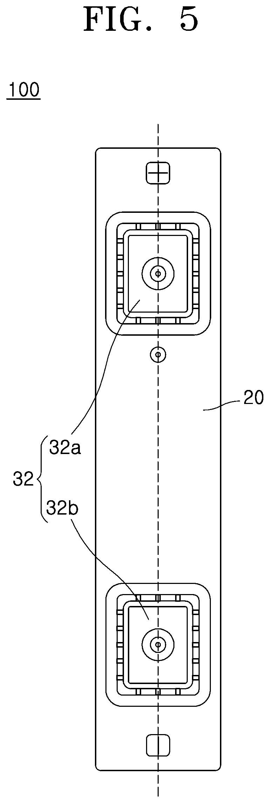

FIG. 5 is a schematic top view illustrating a terminal according to an embodiment of the present invention.

In FIGS. 3 to 5, 100 represents a secondary battery (e.g., including the secondary battery described with respect to FIGS. 1 and 2) according to an embodiment of the present invention.

As described with respect to FIGS. 1 and 2, the secondary battery 100 includes a plurality of electrode assemblies 40. The plurality of electrode assemblies 40 include a first electrode assembly 40a and a second electrode assembly 40b in which same or identical electrodes are disposed to face each other.

The secondary battery 100 includes a sub-tab 50 connected to the electrode assembly 40. The sub-tab 50 may collect a bundle of tabs 42 extending from the main body 41. The tab 42 extends from the electrodes, and may form a bundle of tabs as the electrodes are formed by stacking multiple sheets. The sub-tab 50 is connected to the tab 42 to provide a passage through which the tab 42 may be electrically connected to a terminal 30.

The sub-tab 50 includes a first sub-tab 50a and a second sub-tab 50b.

The first sub-tab 50a is connected to the first electrode assembly 40a. The first sub-tab 50a is connected to the first electrode through the first tab, which is connected to the first electrode of the first electrode assembly 40a. In an embodiment, the first sub-tab 50a is provided on the upper side of the first electrode assembly 40a while covering the first tab. In an embodiment, for example, the first sub-tab 50a is provided on the upper side of the first electrode assembly 40a and joined to the first tab through welding. The first sub-tab 50a may be formed from the same electrode as the first electrode.

The second sub-tab 50b is connected to the second electrode assembly 40b. The second sub-tab 50b is connected to the first electrode through the first tab, which is connected to the first electrode of the second electrode assembly 40b. In an embodiment, the second sub-tab 50b is provided on the upper side of the second electrode assembly 40b while covering the first tab. In an embodiment, for example, the second sub-tab 50b is provided on the upper side of the second electrode assembly 40b and joined to the first tab through welding. The second sub-tab 50b may be formed from the same electrode as the first electrode.

The first electrode assembly 40a and the second electrode assembly 40b may be arranged within the case 10. For example, the first electrode assembly 40a and the second electrode assembly 40b may be disposed such that wide sides thereof face each other. The first electrode assembly 40a and the second electrode assembly 40b may be disposed such that the same electrodes face each other. For example, the first electrode assembly 40a and the second electrode assembly 40b may be disposed such that the first sub-tab 50a and the second sub-tab 50b face each other. The first sub-tab 50a and the second sub-tab 50b may have the same electrode. For example, if the first sub-tab 50a is the sub-tab connected to the negative electrode, the second sub-tab 50b facing the first sub-tab 50a may also be a sub-tab connected to the negative electrode. For example, if the first sub-tab 50a is the sub-tab connected to the positive electrode, the second sub-tab 50b facing the first sub-tab 50a may also be a sub-tab connected to the positive electrode.

If the plurality of electrode assemblies 40 includes three or more electrode assemblies, the plurality of electrode assemblies 40 may be arranged such that the sub-tabs 50 connected to the tabs 42 having the same electrode face each other.

As described with respect to FIG. 1, the electrode assembly 40 is connected to the terminal 30. In an embodiment, for example, the terminal 30 may be directly welded to the sub-tab 50 that is connected to the electrode assembly 40.

In an embodiment, as illustrated in FIG. 4, for example, the terminal 30 includes a detachable terminal 31 connected to the tab 42. For example, the detachable terminal 31 is connected to one sub-tab 50.

For example, a secondary battery 100 includes the first electrode assembly 40a and the second electrode assembly 40b. In this case, the first electrode assembly 40a may have the negative electrode connected to the first negative electrode sub-tab and the positive electrode connected to the first positive electrode sub-tab. In addition, the second electrode assembly 40b may have the negative electrode connected to the second negative electrode sub-tab and the positive electrode connected to the second positive electrode sub-tab. In an embodiment, each of the sub-tabs 50 may be connected to one detachable terminal 31. For example, the first positive electrode sub-tab is connected to a first detachable terminal 31a, the first negative electrode sub-tab is connected to a third detachable terminal 31c, the second positive electrode sub-tab is connected to a second detachable terminal 31b, and the second negative electrode sub-tab is connected to a fourth detachable terminal 31d.

In an embodiment, a number of the detachable terminals 31 equal to the number of sub-tabs 50 may be provided. In addition, the detachable terminals 31 may be disposed to protrude from the outside of the cap plate 20 in the number of sub-tabs 50.

In an embodiment, as illustrated in FIG. 5, for example, the terminal 30 includes an integrated terminal connected to a plurality of tabs 42. For example, an integrated terminal 32 is connected to a plurality of sub-tabs 50.

For example, a secondary battery 100 includes the first electrode assembly 40a and the second electrode assembly 40b. In an embodiment, the first electrode assembly 40a may have the negative electrode connected to the first negative electrode sub-tab and the positive electrode connected to the first positive electrode sub-tab. In an embodiment, the second electrode assembly 40b may have the negative electrode connected to the second negative electrode sub-tab and the positive electrode connected to the second positive electrode sub-tab. In an embodiment, the plurality of sub-tabs 50 may be connected to one integrated terminal 32. In an embodiment, for example, the first positive electrode sub-tab and the second positive electrode sub-tab are connected to a first integrated terminal 32a, and the first negative electrode sub-tab and the second negative electrode sub-tab are connected to a second integrated terminal 32b. In this way, the plurality of sub-tabs 50 disposed to face each other may be connected to one integrated terminal 32.

In an embodiment, a number of the integrated terminals 32 less than the number of sub-tabs 50 may be provided. In addition, fewer of the integrated terminals 32 than the number of sub-tabs 50 may be disposed to protrude outside the cap plate 20. For example, if the secondary battery 100 includes a plurality of electrode assemblies 40 including two sub-tabs 50, the secondary battery 100 may connect the plurality of electrode assemblies 40 and terminals 30 through at least two integrated terminals 32.

In this way, a multi-stack jellyroll and a single terminal structure or a multi-terminal structure of another secondary battery 100 according to an embodiment of the present invention may be provided. Accordingly, a structure of the secondary battery 100 in which the volume can be easily increased in the thickness direction can be provided.

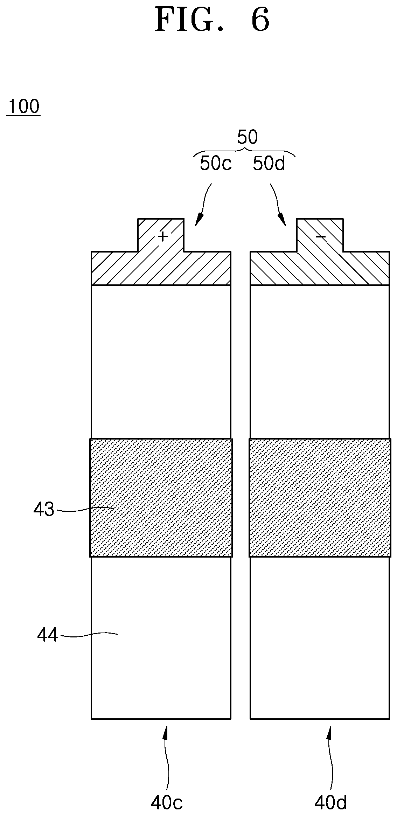

FIG. 6 is a schematic view illustrating an arrangement of two or more electrode assemblies according to an embodiment of the present invention.

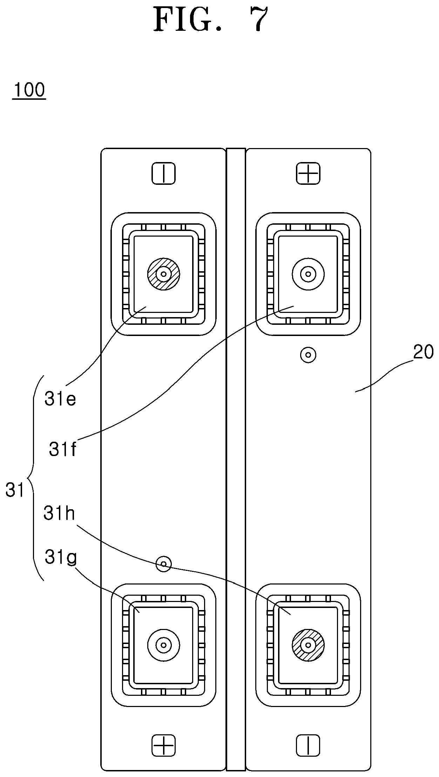

FIG. 7 is a schematic top view illustrating a terminal according to an embodiment of the present invention.

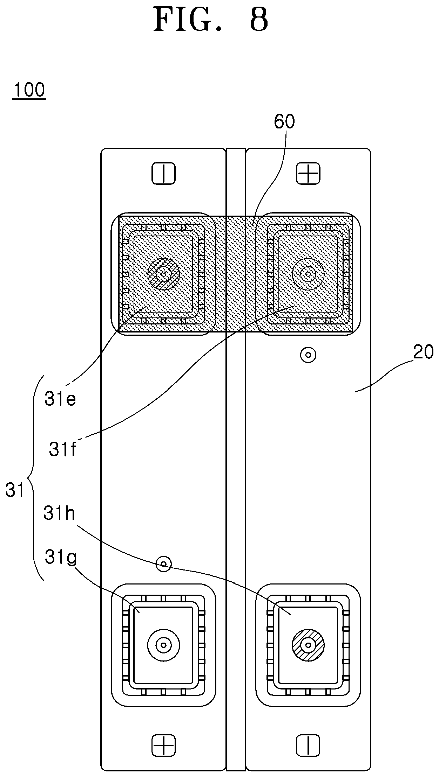

FIG. 8 is a schematic top view illustrating a terminal according to an embodiment of the present invention.

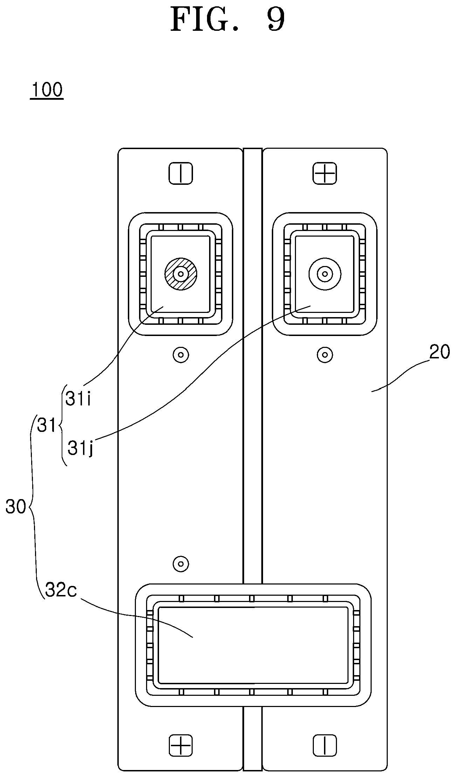

FIG. 9 is a schematic top view illustrating a terminal according to an embodiment of the present invention.

In FIGS. 6 to 9, 100 represents a secondary battery (e.g., including the secondary battery described with respect to FIGS. 1 and 2) according to an embodiment of the present invention.

As described in FIGS. 1 and 2, the secondary battery 100 includes a plurality of electrode assemblies 40. The plurality of electrode assemblies 40 include a third electrode assembly 40c and a fourth electrode assembly 40d in which same or identical electrodes are disposed to face each other.

The secondary battery 100 includes a sub-tab 50 connected to the electrode assembly 40. The description of the sub-tab 50 may be the same or similar to that described with respect to FIGS. 3 to 5.

The sub-tab 50 includes a third sub-tab 50c and a fourth sub-tab 50d.

The third sub-tab 50c is connected to the third electrode assembly 40c. The third sub-tab 50c is connected to the first electrode through the first tab, which is connected to the first electrode of the third electrode assembly 40c. In an embodiment, the third sub-tab 50c is provided on the upper side of the third electrode assembly 40c while covering the first tab. In an embodiment, for example, the third sub-tab 50c is provided on the upper side of the third electrode assembly 40c and joined to the first tab through welding. In an embodiment, the third sub-tab 50c may be formed from the same electrode as the first electrode.

The fourth sub-tab 50d is connected to the fourth electrode assembly 40d. The fourth sub-tab 50d is connected to the second electrode through the second tab, which is connected to the second electrode of the fourth electrode assembly 40d. In an embodiment, the fourth sub-tab 50d is provided on the upper side of the fourth electrode assembly 40d while covering the second tab. In an embodiment, for example, the fourth sub-tab 50d is provided on the upper side of the fourth electrode assembly 40d and joined to the second tab through welding. In an embodiment, the fourth sub-tab 50d may be formed from the same electrode as the second electrode.

The third electrode assembly 40c and the fourth electrode assembly 40d may be arranged within the case 10. For example, the third electrode assembly 40c and the fourth electrode assembly 40d may be disposed such that wide sides thereof face each other. The third electrode assembly 40c and the fourth electrode assembly 40d may be disposed such that the different electrodes face each other. For example, the third electrode assembly 40c and the fourth electrode assembly 40d may be disposed such that the third sub-tab 50c and the fourth sub-tab 50d face each other. In an embodiment, the third sub-tab 50c and the fourth sub-tab 50d may have the same electrode. For example, if the third sub-tab 50c is the sub-tab connected to the negative electrode, the fourth sub-tab 50d facing the third sub-tab 50c may also be a sub-tab connected to the negative electrode. In an embodiment, if the first sub-tab 50a is the sub-tab connected to the positive electrode, the fourth sub-tab 50d facing the third sub-tab 50c may also be a sub-tab connected to the positive electrode.

As described with respect to FIG. 1, the electrode assembly 40 is connected to the terminal 30.

As illustrated in FIG. 7, for example, the terminal 30 includes a detachable terminal 31 connected to the tab.

For example, the secondary battery 100 includes a third electrode assembly 40c and a fourth electrode assembly 40d. In an embodiment, the third electrode assembly 40c may have the negative electrode connected to the third negative electrode sub-tab and the positive electrode connected to the third positive electrode sub-tab. In an embodiment, the fourth electrode assembly 40d may have the negative electrode connected to the fourth negative electrode sub-tab and the positive electrode connected to the fourth positive electrode sub-tab. In an embodiment, each of the sub-tabs 50 may be connected to one detachable terminal 31. In an embodiment, for example, the third positive electrode sub-tab is connected to a seventh detachable terminal 31g, the third negative electrode sub-tab is connected to a fifth detachable terminal 31e, the fourth positive electrode sub-tab is connected to a sixth detachable terminal 31f, and the fourth negative electrode sub-tab is connected to an eighth detachable terminal 31h.

In an embodiment, a number of the detachable terminals 31 equal to the number of sub-tabs 50 may be provided. The detachable terminals 31 may be disposed to protrude from the outside of the cap plate 20 in the number of sub-tabs 50.

In an embodiment, for example, as illustrated in FIG. 8, the secondary battery 100 includes a bus bar 60 connecting two or more detachable terminals. For example, the bus bar 60 electrically connects two or more detachable terminals 31 that are disposed to face each other. Through this, the secondary battery 100 according to an embodiment of the present invention can implement a voltage that is i times that of one electrode assembly 40. At this time, i is the number of detachable terminals 31 connected by the bus bar 60 in one secondary battery 100. For example, in FIG. 8, the secondary battery 100 can implement a voltage that is 2 times that of one electrode assembly 40.

In an embodiment, as illustrated in FIG. 9, for example, the terminal 30 includes an integrated terminal connected to a plurality of tabs. For example, an integrated terminal 32 is connected to a plurality of sub-tabs 50. For example, an integrated terminal 32 may be connected to the plurality of sub-tabs 50 that are connected to different electrodes.

For example, the secondary battery 100 includes a third electrode assembly 40c and a fourth electrode assembly 40d. In this case, the third electrode assembly 40c may have the negative electrode connected to the third negative electrode sub-tab and the positive electrode connected to the third positive electrode sub-tab. In addition, the fourth electrode assembly 40d may have the negative electrode connected to the fourth negative electrode sub-tab and the positive electrode connected to the fourth positive electrode sub-tab. In an embodiment, the plurality of sub-tabs 50 may be connected to one integrated terminal 32. For example, the third positive electrode sub-tab and the fourth negative electrode sub-tab may be connected to a third integrated terminal 32c. In this way, a plurality of sub-tabs 50 and disposed to face each other may be connected to one integrated terminal 32.

In an embodiment, a number of integrated terminals 32 less than the number of sub-tabs 50 can be provided. In addition, fewer of the integrated terminals 32 than the number of sub-tabs 50 may be disposed to protrude outside the cap plate 20. For example, if the secondary battery 100 includes a plurality of electrode assemblies 40 including two sub-tabs 50, the secondary battery 100 may have the plurality of electrode assemblies 40 and terminals 30 connected through at least two integrated terminals 32.

In an embodiment, as illustrated in FIGS. 7 to 9, for example, the terminal 30 may include a plurality of detachable terminals 31. In an embodiment, for example, the terminal 30 may include the plurality of detachable terminals 31 and one or more integrated terminals 32. In an embodiment, for example, the terminal 30 may include the plurality of integrated terminals 32.

In an embodiment, the third negative electrode sub-tab is connected to a ninth detachable terminal 31i, and the fourth positive electrode sub-tab is connected to a tenth detachable terminal 31j. In this way, the plurality of sub-tabs 50 disposed to face each other may be connected to each of different detachable terminals 32.

In this way, a multi-stack electrode assembly and a single terminal structure or a multi-terminal structure of another secondary battery 100 according to an embodiment of the present invention may be provided. In addition, accordingly, a structure of the secondary battery 100 in which the volume in the thickness direction can be easily increased can be proposed. In addition, the secondary battery 100 can implement high capacity and/or high potential of an unit electrode assembly.

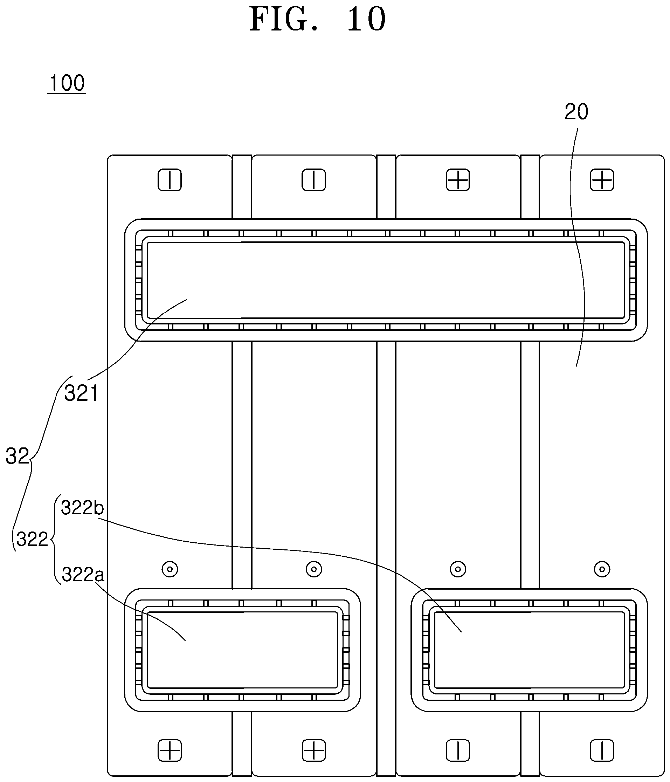

FIG. 10 is a schematic top view illustrating a terminal according to an embodiment of the present invention.

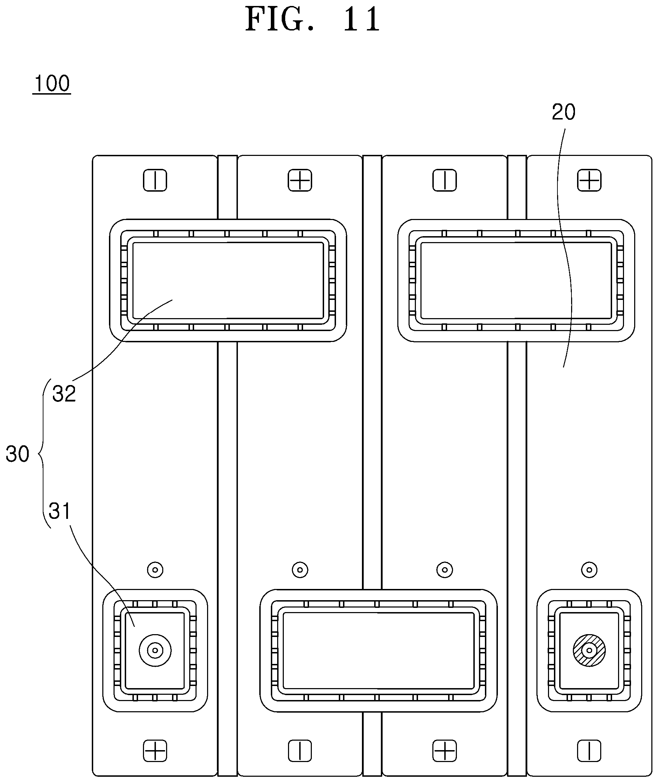

FIG. 11 is a schematic top view illustrating a terminal according to an embodiment of the present invention.

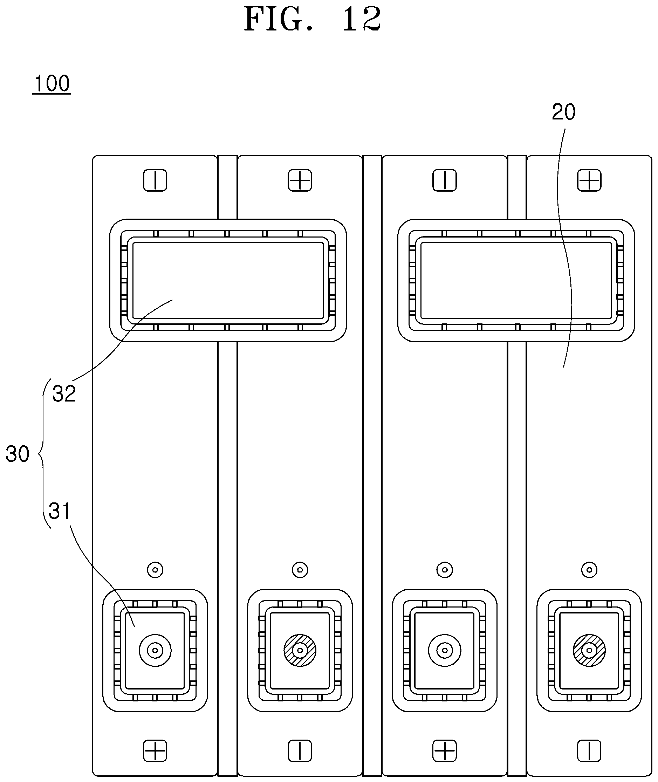

FIG. 12 is a schematic top view illustrating a terminal according to an embodiment of the present invention.

In FIGS. 10 to 12, 100 represents a secondary battery (e.g., including the secondary battery described with respect to FIGS. 1 to 9) according to an embodiment of the present invention. In FIGS. 10 to 12, various examples of the secondary batteries 100 described with respect to FIGS. 1 to 9 are described.

The secondary battery 100 includes the plurality of electrode assemblies 40. For example, FIGS. 10 to 12 illustrate examples in which the secondary battery 100 includes four electrode assemblies 40 and a terminal 30 electrically connected to the electrode assemblies 40.

As illustrated in FIG. 10, the secondary battery 100 may be arranged such that some sub-tabs 50 connected to the same electrode face each other, and some other sub-tabs 50 connected to different electrodes face each other. For example, in the case of 2k electrode assemblies 40, k electrode assemblies may be arranged such that the sub-tabs 50 connected to the first electrode face each other, and the remaining k electrode assemblies may be arranged such that the sub-tabs 50 connected to the second electrode face each other. In addition, at a boundary where the k electrode assemblies and the remaining k electrode assemblies meet, the sub-tabs connected to the first electrode and the sub-tabs connected to the second electrode may be arranged to face each other.

In an embodiment, the terminal 30 may include the plurality of integrated terminals 32. The integrated terminal 32 includes, for example, an integrated terminal 321 connected to 2k sub-tabs 50. For example, one integrated terminal 321 may be connected to four sub-tabs 50. For example, one integrated terminal 321 may be connected to two negative electrode sub-tabs and two positive electrode sub-tabs. At this time, one integrated terminal 321 connected to 2k sub-tabs 50 may be connected to the sub-tabs 50 having different electrodes. In an embodiment, the integrated terminal 32 includes, for example, an integrated terminal 322a connected to k sub-tabs 50 and an integrated terminal 322b connected to the remaining k sub-tabs 50. Each of the integrated terminals 322a and 322b connected to the k sub-tabs 50 may be connected to the sub-tab 50 having the same electrode.

As illustrated in FIGS. 11 and 12, the secondary battery 100 may include the plurality of electrode assemblies 40 arranged such that sub-tabs 50 connected to different electrodes face each other. The terminal 30 connected to the electrode assembly 40 may include one or more integrated terminals 32 and the plurality of detachable terminals 31. In an embodiment, as illustrated in FIG. 11, the integrated terminal 32 and the detachable terminal 31 may be disposed alternately on one side. In an embodiment, as illustrated in FIG. 12, only detachable terminals 31 may be located on one side, and only integrated terminals 32 may be located on another side.

In this way, the integrated terminal is electrically connected to n first electrodes and m second electrodes, and if n is an integer greater than or equal to 1, m is equal to n, and if n is 0, m is an integer greater than or equal to 2.

In an embodiment, the terminals 30 are formed in a number less than or equal to the tabs, and the tabs include a bundle of tabs extending from the electrode. In an embodiment, the terminals 30 may be formed in a number less than or equal to the sub-tabs 50.

As described in FIGS. 10 to 12, according to an embodiment of the present invention, an arrangement of the electrode assembly 40 and/or the size and/or arrangement of the terminal 30 may be set in consideration of the required capacity, location, and/or potential.

Through this structure, a series connection structure can be provided within the secondary battery 100 according to an embodiment of the present invention. In addition, a structure of the secondary battery 100 capable of efficiently implementing high capacity and/or high potential even if the number of electrode plates included in the electrode is increased and the thickness of the secondary battery 100 becomes thicker is provided.

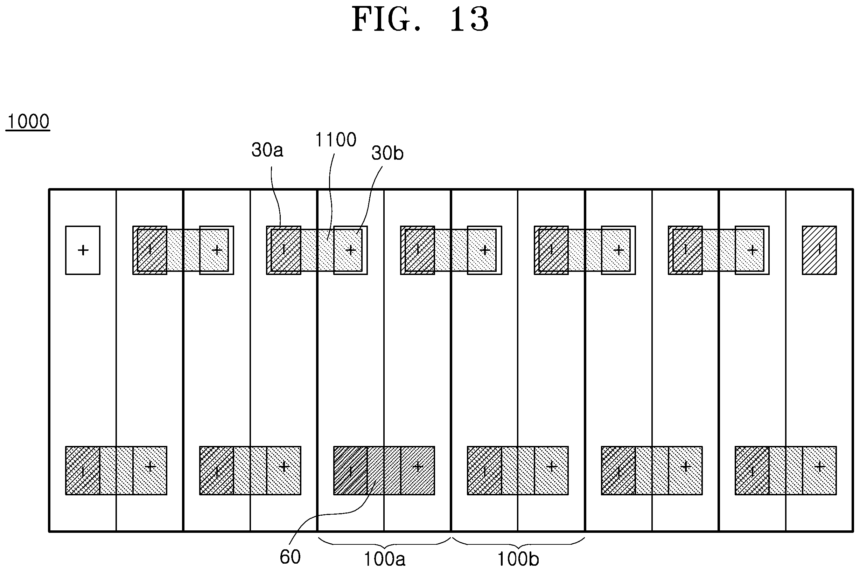

FIG. 13 is a schematic top view illustrating a terminal in a battery module according to an embodiment of the present invention.

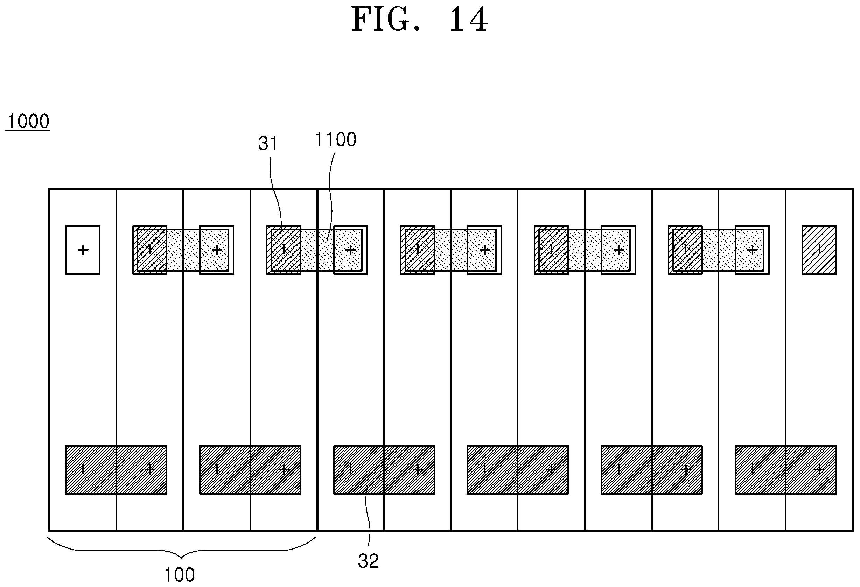

FIG. 14 is a schematic top view illustrating a terminal in a battery module according to an embodiment of the present invention.

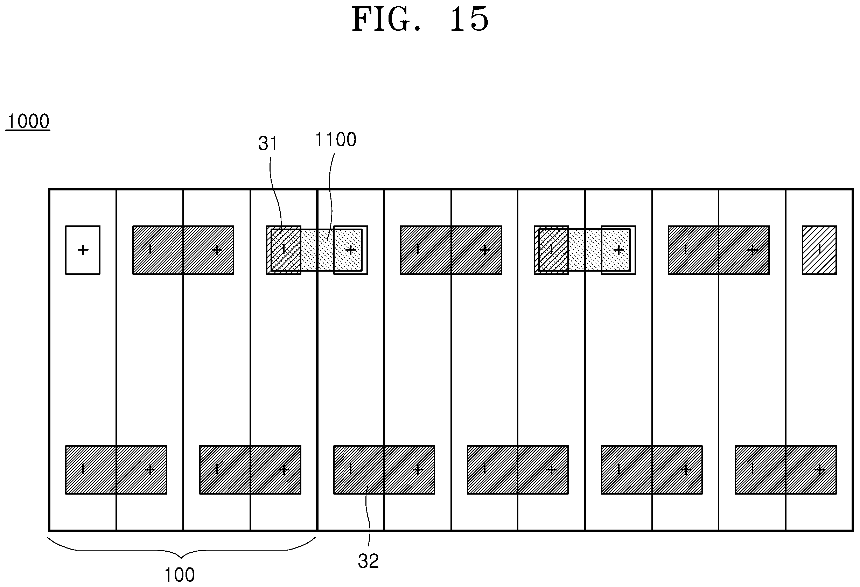

FIG. 15 is a schematic top view illustrating a terminal in a battery module according to an embodiment of the present invention.

In FIGS. 13 to 15, 1000 represents a battery module 1000 according to an embodiment of the present invention.

The battery module 1000 includes a plurality of secondary batteries 100 (e.g., including the secondary batteries 100 described in FIGS. 1 to 12), and a housing (not shown) accommodating the plurality of secondary batteries 100, and each of the plurality of secondary batteries 100 includes a plurality of electrode assemblies 40, each including an electrode forming a tab, a case 10 accommodating the plurality of electrode assemblies 40, a cap plate 20 covering an opening of the case 10, and a terminal 30 protruding from the outside of the cap plate 20 and electrically connected to the plurality of electrode assemblies 40.

The plurality of secondary batteries 100 include a first secondary battery 100a, and a second secondary battery 100b, the terminal 30 includes a first terminal 30a included in the first secondary battery 100a and connected to a first electrode, and a second terminal 30b included in the second secondary battery 100b and connected to a second electrode, and the battery module 1000 further includes a module bus bar 1100 connecting the first terminal 30a and the second terminal 30b.

As illustrated in FIG. 13, the plurality of secondary batteries 100 included in the battery module 1000 may connect terminals 30 included in adjacent secondary batteries 100 through a module bus bar 1100.

For example, the module bus bar 1100 connects the first secondary battery 100a and the second secondary battery 100b located adjacent to each other. For example, the first secondary battery 100a includes a first terminal 30a electrically connected to the first electrode. For example, the second secondary battery 100b includes a second terminal 30b electrically connected to the second electrode. The module bus bar 1100 may connect the first terminal 30a and the second terminal 30b. In an embodiment, two or more terminals 30 connected by the module bus bar 1100 have different electrodes.

As illustrated in FIG. 13, the plurality of terminals 30 provided within one secondary battery may be connected through a bus bar 60.

As illustrated in FIG. 14, the bus bar 60 may be replaced with an integrated terminal 32. Through this structure, the battery module 1000 according to an embodiment of the present invention may reduce the use of the bus bar 60.

Further, as illustrated in FIG. 15, one secondary battery 100 may have terminals formed in the form of an integrated terminal 32 except for a terminal (e.g., a detachable terminal 31) for electrical connection with an adjacent secondary battery 100. In this case, the battery module 1000 according to an embodiment of the present invention may minimize or reduce the use of the bus bar 60.

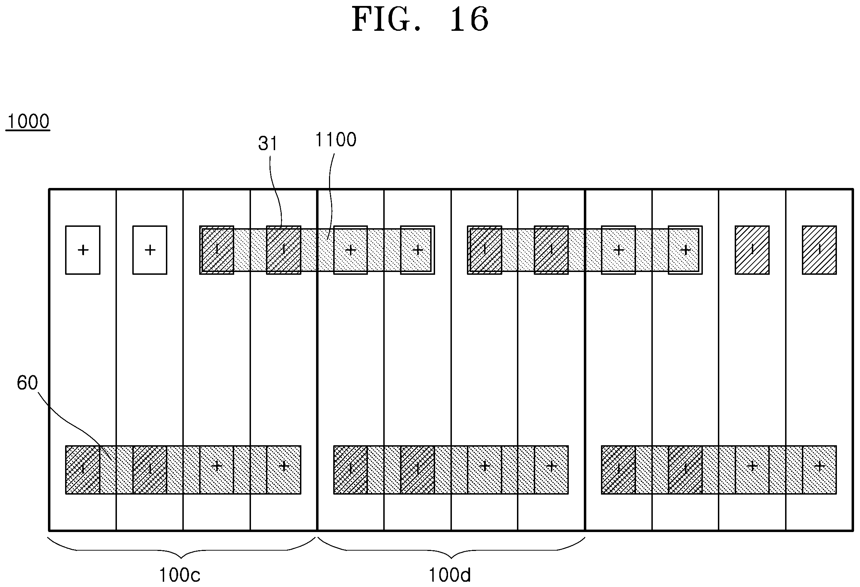

FIG. 16 is a schematic top view illustrating a terminal in a battery module according to an embodiment of the present invention.

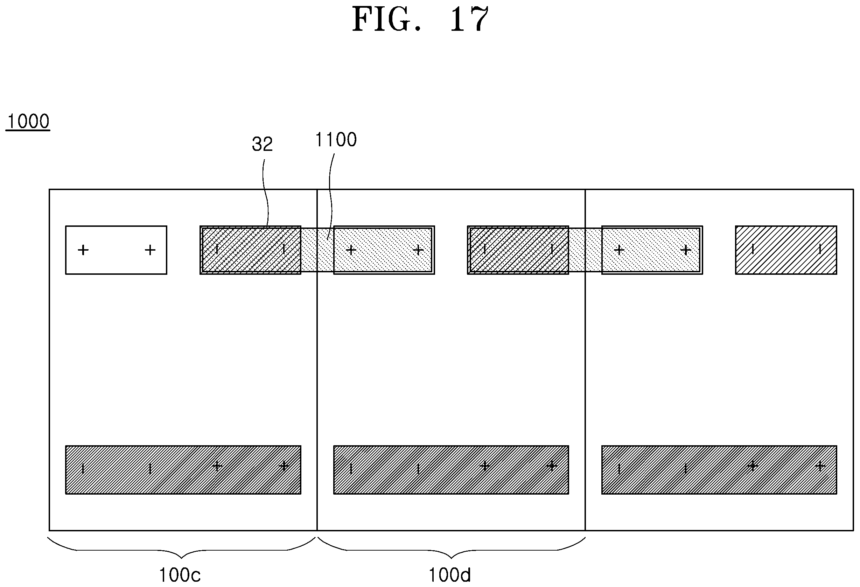

FIG. 17 is a schematic top view illustrating a terminal in a battery module according to an embodiment of the present invention.

In FIGS. 16 and 17, 1000 represents a battery module according to an embodiment of the present invention (e.g., including the battery module 1000 described with respect to FIGS. 13 to 15).

In an embodiment, the battery module 1000 includes the plurality of secondary batteries 100 disposed in various forms. In an embodiment, the battery module 1000 includes terminals 30 disposed in various shapes, numbers, and/or sizes. In an embodiment, the battery module 1000 may include a bus bar 60 disposed in various shapes, numbers, and/or sizes. In an embodiment, the battery module 1000 includes the module bus bar 1100 disposed in various shapes, numbers, and/or sizes.

For example, as illustrated in FIG. 16, the bus bar 60 may connect the plurality of terminals 30 included in one secondary battery 100. For example, the bus bar 60 may connect two or more terminals 30 provided in one secondary battery 100, and, for example, may connect four or more terminals 30. For example, the bus bar 60 may connect two or more detachable terminals 31 provided in one secondary battery 100.

In an embodiment, for example, as illustrated in FIG. 17, the role of the bus bar 60 connecting the plurality of detachable terminals 31 may be replaced by one or more integrated terminals 32.

In an embodiment, for example, as illustrated in FIG. 16, the module bus bar 1100 may connect the plurality of terminals 30 included in two or more secondary batteries 100. For example, the module bus bar 1100 may connect one or more detachable terminals 31 included in a third secondary battery 100c and one or more detachable terminals 31 included in a fourth secondary battery 100d. In an embodiment, for example, the number of detachable terminals 31 connected by the module bus bar 1100 may be the same as in the third secondary battery 100c and the fourth secondary battery 100d. For example, the module bus bar 1100 may connect two detachable terminals 32 of the third secondary battery 100c and two detachable terminals 31 of the fourth secondary battery 100d.

In an embodiment, for example, as illustrated in FIG. 17, the module bus bar 1100 may connect one or more integrated terminals 32 included in, for example, the third secondary battery 100c and one or more integrated terminals 32 included in, for example, the fourth secondary battery 100d. In an embodiment, for example, the number of integrated terminals 32 connected by the module bus bar 1100 may be the same as in the third secondary battery 100c and the fourth secondary battery 100d. For example, the module bus bar 1100 may connect one integrated terminal 32 of the third secondary battery 100c and one integrated terminal 32 of the fourth secondary battery 100d.

In this way, the battery module 1000 according to one or more embodiments of the present invention can be applied to various specifications in a compatible manner through various arrangements, shapes, and/or structures. Through this, the battery module 1000 can provide a secondary battery module having a high capacity and/or high potential.

According to one or more embodiments of the present invention, a secondary battery and/or battery module having improved energy density is provided.

According to one or more embodiments of the present invention, a secondary battery and/or battery module having improved voltage is provided.

According to one or more embodiments of the present invention, a secondary battery and/or battery module capable of efficiently increasing the capacity is provided.

## Claims

1. A secondary battery (100) comprising:
a plurality of electrode assemblies (40), each comprising an electrode including a tab (42);
a case (10) accommodating the plurality of electrode assemblies (40);
a cap plate (20) covering an opening of the case (10); and
a terminal (30) protruding outside of the cap plate (20) and electrically connected to the plurality of electrode assemblies (40).

2. The secondary battery (100) as claimed in claim 1, wherein the electrodes comprise a first electrode and a second electrode, and
the plurality of electrode assemblies (40) comprises a first electrode assembly (40a) and a second electrode assembly (40b) in which same electrodes are arranged to face each other.

3. The secondary battery (100) as claimed in claim 1, wherein the electrodes comprise a first electrode and a second electrode, and
the plurality of electrode assemblies comprises a first electrode assembly (40a) and a second electrode assembly (40b) in which different electrodes are arranged to face each other.

4. The secondary battery (100) as claimed in any one of the preceding claims, wherein the terminal (30) comprises a detachable terminal (31) connected to the tab (42).

5. The secondary battery (100) as claimed in claim 4, further comprising a bus bar (60) connecting two or more detachable terminals (31).

6. The secondary battery (100) as claimed in any one of the preceding claims, wherein the terminal (30) comprises an integrated terminal (32) connected to the plurality of tabs (42).

7. The secondary battery (100) as claimed in claim 6, wherein the electrodes comprise a first electrode and a second electrode, and
the integrated terminal (32) is electrically connected to n first electrodes and m second electrodes, wherein, if n is an integer greater than or equal to 1, m is equal to n, and if n is 0, m is an integer greater than or equal to 2.

8. The secondary battery (100) as claimed in any one of the preceding claims, wherein the terminal (30) is provided in a number less than or equal to a number of the tabs (42).

9. The secondary battery (100) as claimed in any one of the preceding claims, further comprising a pack (44) surrounding an outer surface of each of the plurality of electrode assemblies (40).

10. A battery module (1000) comprising:
a plurality of secondary batteries (100) as defined in any one of the preceding claims; and
a housing accommodating the plurality of secondary batteries (100).

11. The battery module (1000) as claimed in claim 10, wherein the plurality of secondary batteries (100) comprises: a first secondary battery (100a); and a second secondary battery (100b),
the terminal (30) comprises: a first terminal (30a) included in the first secondary battery (100a) and connected to a first electrode; and a second terminal (30b) included in the second secondary battery (100b) and connected to a second electrode, and
the battery module (1000) further comprises a module bus bar (1100) connecting the first terminal (30a) and the second terminal (30b).

12. The battery module (1000) as claimed in claim 10 or 11, wherein the terminal (30) is provided in a number less than or equal to a number of the tabs (42).
